# EUROPÄISCHE PATENTSCHRIFT

(11) **EP 2 577 105 B1**
(45) Veröffentlichungstag und Bekanntmachung des Hinweises auf die Patenterteilung: **25.10.2017**
(21) Anmeldenummer: 10790534.1
(22) Anmeldetag: 03.12.2010
(51) Int. Cl.: F16H 45/02

(54) **HYDRODYNAMISCHE KOPPLUNGSEINRICHTUNG, INSBESONDERE DREHMOMENTWANDLER**
HYDRODYNAMIC COUPLING DEVICE IN PARTICULAR A TORQUE CONVERTER
APPAREIL HYDRODYNAMIQUE DE COUPLAGE EN PARTICULIER UN CONVERTISSEUR DE COUPLE

(30) Priorität: 25.05.2010 DE 102010029255
(43) Veröffentlichungstag der Anmeldung: 10.04.2013
(73) Patentinhaber: ZF Friedrichshafen AG, 88046 Friedrichshafen (DE)
(72) Erfinder: DOEGEL, Thomas, 97720 Nüdlingen (DE); KUEHNER, Michael, 97523 Schwanfeld (DE); HOFFELNER, Ingrid, 97478 Knetzgau (DE); KOPP, Mathias, 96050 Bamberg (DE)
(86) Internationale Anmeldenummer: PCT/EP2010/068821
(87) Internationale Veröffentlichungsnummer: WO 2011/147486

(56) Entgegenhaltungen:
- DE-A1- 19 835 758
- DE-A1-102008 034 557
- DE-A1-102008 057 648
- US-A1- 2002 033 310
- US-A1- 2009 125 202
- US-B1- 6 231 472

## Beschreibung

Die vorliegende Erfindung betrifft eine hydrodynamische Kopplungseinrichtung, insbesondere hydrodynamischer Drehmomentwandler, wie sie beispielsweise im Antriebsstrang eines Fahrzeugs eingesetzt werden kann, siehe zum Beispiel die US-A-2002/033310. Vor allem bei mit Brennkraftmaschinen aufgebauten Antriebssträngen kann bedingt dadurch, dass in Brennkraftmaschinen periodisch Zündungen auftreten und die dabei freigesetzte Energie in eine Drehbewegung der Kurbelwelle umgesetzt wird, grundsätzlich kein konstantes Drehmoment in einen Antriebsstrang eingeleitet werden. Sowohl das von der Kurbelwelle abgegebene Drehmoment, als auch deren Drehzahl unterliegt Schwankungen bzw. Schwingungen, allgemein Drehungleichförmigkeiten. Da derartige Drehungleichförmigkeiten im Fahrbetrieb spürbar sein können, besteht allgemein die Zielsetzung, diese so weit als möglich zu eliminieren.

Beispielsweise ist es bekannt, in Drehmomentwandlern durch den Einsatz von Kraft- bzw. Energiespeichern, also beispielsweise Federn oder sich bewegende Massen oder Kombinationen daraus, die bei derartigen Drehungleichförmigkeiten auftretenden Energien vorübergehend zu speichern und sie dann so in den Antriebsstrang weiterzugeben, dass ein geglätteter Drehzahl- bzw. Drehmomentenverlauf erreicht werden kann. Sogenannte Turbinentorsionsschwingungsdämpfer und Zweidämpferwandler sind Beispiele hierfür. Als drehzahladaptive Tilger bekannte Massenpendel setzen die im Fahrzustand auftretenden Drehungleichförmigkeiten in oszillierende Auslenkungen von Schwingungsmassen um, wobei die Auslenkung entgegen der Fliehkraft erfolgt und durch Vorgabe der Auslenkungsbahn bzw. auch der auszulenkenden Massen eine Abstimmung auf bestimmte Anregungsdrehzahlen bzw. Anregungsfrequenzen erreicht werden kann. Derartige Tilger können selbstverständlich mit durch Einsatz von Federn oder dergleichen schwingenden Massensystemen kombiniert werden.

Auf Grund der im modernen Fahrzeugbau immer beengter werdenden Platzverhältnisse steht auch für die zur Schwingungsdämpfung eingesetzten Systeme weniger Bauraum mit entsprechenden Einbußen in der Entkopplungsgüte, also der Verringerung der auftretenden Drehungleichförmigkeiten, zur Verfügung.

Es ist die Aufgabe der vorliegenden Erfindung, eine hydrodynamische Kopplungseinrichtung bereitzustellen, welche eine verbesserte Verringerung von in einen Antriebsstrang eingeleiteten Drehungleichförmigkeiten erreicht.

Erfindungsgemäß wird diese Aufgabe gelöst durch eine Hydrodynamische Kopplungseinrichtung, insbesondere Drehmomentwandler, umfassend eine mit Fluid gefüllte oder fühlbare Gehäuseanordnung, ein mit der Gehäuseanordnung um eine Drehachse drehbares Pumpenrad, ein in der Gehäuseanordnung angeordnetes und mit einem Abtriebsorgan um die Drehachse drehbares Turbinenrad, eine Überbrückungskupplung zur Herstellung einer Drehmomentübertragungsverbindung zwischen der Gehäuseanordnung und dem Abtriebsorgan, eine Drehschwingungsdämpfungsanordnung mit einem Eingangsbereich und einem Ausgangsbereich, wobei zwischen dem Eingangsbereich und dem Ausgangsbereich ein erster Drehmomentübertragungsweg und parallel dazu ein zweiter Drehmomentübertragungsweg sowie eine Koppelanordnung zur Überlagerung der über die Drehmomentübertragungswege geleiteten Drehmomente vorgesehen sind, wobei die Drehschwingungsdämpfungsanordnung ferner wenigstens im ersten Drehmomentübertragungsweg eine Phasenschieberanordnung umfasst zur Erzeugung einer Phasenverschiebung von über den ersten Drehmomentübertragungsweg geleiteten Drehungleichförmigkeiten bezüglich über den zweiten Drehmomentübertragungsweg geleiteten Drehungleichförmigkeiten vorgesehen ist, und wobei die Drehschwingungsdämpfungsanordnung so angeordnet ist, dass durch ein Unterbrechen von einem der Drehmomentübertragungswege der gesamte Drehmomentfluss über die Drehschwingungsdämpfungsanordnung unterbrochen wird. Bei der erfindungsgemäßen Drehschwingungsdämpfungsanordnung wird durch Einsatz der Phasenschieberanordnung dafür gesorgt, dass zunächst durch Aufteilung und dann wieder Zusammenführung des übertragenen Drehmoments durch die dabei eingeführte Phasenverschiebung eine destruktive Überlagerung von Schwingungsanteilen in dem zu übertragenden Drehmoment auftritt. Im Idealfalle findet zumindest in einem besonders kritischen Frequenzbereich eine nahezu vollständige Eliminierung der Drehungleichförmigkeiten statt.

Um diese Phasenverschiebung bei baulich einfacher Weise effizient erreichen zu können, wird vorgeschlagen, dass die Phasenschieberanordnung ein Schwingungssystem mit einer Primärseite und einer gegen die Wirkung einer Federanordnung bezüglich der Primärseite um die Drehachse drehbaren Sekundärseite umfasst.

Die Phasenschieberanordnung ist somit im Wesentlichen nach dem Funktionsprinzip eines Zweimassenschwingers aufgebaut, bei welchem zwei gegen die Wirkung der Federanordnung bezüglich einander schwingende Massen, also im Wesentlichen die Primärseite und die Sekundärseite, durch Auswahl der Federsteifigkeit einerseits und der Massenverhältnisse bzw. der Massenträgheit an der Primärseite und der Sekundärseite andererseits mit einem gewünschten Schwingungsverhalten bereitgestellt werden. Charakteristisch ist, dass ein derartiges Schwingungssystem eine Resonanzfrequenz aufweist. Im Frequenzbereich unter der Resonanzfrequenz schwingt ein derartiges Schwingungssystem unterkritisch, d.h. Anregung und Reaktion des Systems treten im Wesentlichen gleichzeitig auf. Mit Überschreiten der Resonanzfrequenz tritt ein Phasensprung auf, so dass im Wesentlichen Anregung und Reaktion des Systems zueinander phasenverschoben auftreten, das System also überkritisch arbeitet. Diesen Phasensprung, der im Idealfalle bei einem Maximalwert von 180° liegt, nutzt die vorliegende Erfindung, um durch Überlagerung des so phasenverschobenen Drehmomentenschwingungsanteils mit dem nicht phasenverschobenen Drehmomentenschwingungsanteil die gewünschte Minderung der Drehungleichförmigkeiten zu erreichen.

Um ein weiter verbessertes Schwingungsdämpfungsverhalten im Drehmomentübertragungsweg zu dem Abtriebsorgan erreichen zu können, wird vorgeschlagen, dass der Ausgangsbereich ein weiteres Schwingungssystem mit einer Primärseite und einer gegen die Wirkung einer Federanordnung bezüglich der Primärseite drehbaren Sekundärseite umfasst.

Bei einer hinsichtlich der Masseverteilung und damit auch des Schwingungsdämpfungsverhaltens besonders vorteilhaften Weiterbildung der vorliegenden Erfindung wird vorgeschlagen, dass Turbinenrad an den Ausgangsbereich angekoppelt ist.

Wenn dabei weiter vorgesehen ist, dass das Turbinenrad mit der Primärseite des weiteren Schwingungssystems gekoppelt ist, hat das Turbinenrad die Funktion einer Zwischenmasse zwischen den beiden Schwingungssystemen.

Alternativ kann vorgesehen sein, dass das Turbinenrad mit der Sekundärseite des weiteren Schwingungssystems gekoppelt ist, so dass grundsätzlich die ausgangsseitige Masse sehr hoch ist.

Um die direkte Drehmomentübertragungsverbindung zwischen der Gehäuseanordnung und dem Abtriebsorgan vermittels der Überbrückungskupplung herstellen bzw. aufheben zu können, kann beispielsweise vorgesehen sein, dass die Überbrückungskupplung wirkungsmäßig in einem der Drehmomentübertragungswege, vorzugsweise dem ersten Drehmomentübertragungsweg, angeordnet ist. Durch die Unterbrechung von einem der Drehmomentübertragungswege wird die Drehmomentenüberlagerung und mithin der gesamte Drehmomentenfluss über die Drehschwingungsdämpfungsanordnung unterbrochen.

Bei einer alternativen Variante kann vorgesehen sein, dass die Überbrückungskupplung wirkungsmäßig im Ausgangsbereich angeordnet ist. Hier kann also der Drehmomentenfluss durch Ausrücken der Überbrückungskupplung in einem Bereich unterbrochen werden, welcher zwischen der Kopplungsanordung und dem Abtriebsorgan liegt.

Bei einer weiteren alternativen Variante kann die Überbrückungskupplung wirkungsmäßig im Eingangsbereich angeordnet sein. Dies bedeutet, dass die Überbrückungskupplung den Drehmomentenfluss in einem Bereich zwischen der Gehäuseanordnung und demjenigen Bereich, in welchem das zu übertragende Drehmoment auf die beiden Drehmomentübertragungswege aufgeteilt wird, liegt bzw. wirkt.

Bei einer baulich sehr einfachen, kompakt zu realisierenden Ausgestaltungsvarianten wird vorgeschlagen, dass die Kopplungsanordnung eine Planetengetriebeanordnung umfasst. Hierzu kann beispielsweise vorgesehen sein, dass die Planetengetriebeanordnung einen an den zweiten Drehmomentübertragungsweg angebundenen Planetenradträger mit einer Mehrzahl von daran drehbar getragenen Planetenrädern umfasst. Es sei hier darauf hingewiesen, dass die Planetenräder als im Wesentlichen kreisrunde, also mit voll umlaufender Verzahnung ausgebildete Räder ausgebildet sein können, oder alternativ aber auch als Segmenträder ausgebildet sein können.

Um die Planetengetriebeanordnung bzw. deren Planetenräder zur Zusammenleitung der über die beiden Drehmomentübertragungswege geleiteten Drehmomente bzw. Drehmomentanteile in einfacher Weise nutzen zu können, wird vorgeschlagen, dass die Planetengetriebeanordnung eine an den ersten Drehmomentübertragungsweg angebundene erste Koppelradanordnung in Kämmeingriff mit den Planetenrädern und eine an den Ausgangsbereich angebundene zweite Koppelradanordnung in Kämmeingriff mit den Planetenrädern umfasst.

Hierbei kann beispielsweise vorgesehen sein, dass die erste Koppelradanordnung in Verbindung mit den Planetenrädern und die zweite Koppelradanordnung in Verbindung mit den Planetenrädern zueinander gleiche Übersetzungsverhältnisse bereitstellen. Durch das Bereitstellen im Wesentlichen gleicher Übersetzungsverhältnisse kann erreicht werden, dass die über die beiden Drehmomentübertragungswege geleiteten Drehmomentenanteile des gesamt zu übertragenden Drehmoments im Wesentlichen gleich groß sind.

Eine Beeinflussung der über die beiden Drehmomentübertragungswege zu übertragenden Drehmomente bzw. Drehmomentanteile in dem Sinne, dass diese nicht gleich zueinander sind, kann dadurch erfolgen, dass die erste Koppelradanordnung in Verbindung mit den Planetenrädern und die zweite Koppelradanordnung in Verbindung mit den Planetenrädern zueinander unterschiedliche Übersetzungsverhältnisse bereitstellen.

Die erste Koppelradanordnung und die zweite Koppelradanordnung können jeweils als Hohlradanordnung ausgebildet sein, also mit den Planetenrädern in deren radial äußeren Bereich zusammenwirken. Alternativ kann vorgesehen sein, dass die erste Koppelradanordnung und die zweite Koppelradanordnung jeweils eine Sonnenradanordnung umfasst.

Zur weiteren Beeinflussung des Schwingungsdämpfungsverhaltens kann vorgesehen sein, dass das Schwingungssystem oder/und das weitere Schwingungssystem wenigstens zwei zueinander seriell angeordnete Schwingungsdämpfer jeweils mit einer Primärseite und einer bezüglich dieser drehbaren Sekundärseite umfasst. Alternativ oder zusätzlich kann vorgesehen sein, dass das Schwingungssystem oder/und das weitere Schwingungssystem wenigstens zwei zueinander parallel wirksame Schwingungsdämpfer jeweils mit einer Primärseite und einer bezüglich dieser drehbaren Sekundärseite umfasst.

Wenn das Schwingungssystem oder/und das weitere Schwingungssystem eine drehzahladaptive Schwingungsdämpfungsanordnung mit wenigstens einer in Umfangsrichtung aus einer Grundlage auslenkbaren und dabei ihren Abstand zur Drehachse verändernde Auslenkungsmasse umfasst, wird es weiter möglich, das Schwingungsdämpfungsverhalten in der erfindungsgemäß aufgebauten hydrodynamischen Kopplungseinrichtung an spezielle Anregungsfrequenzen bzw. Ordnungen derselben anzupassen.

Bei einer alternativen Ausgestaltungsvariante kann dies dadurch erreicht werden, dass das Schwingungssystem oder/und das weitere Schwingungssystem eine Festfrequenz-Schwingungsdämpfungsanordnung mit wenigstens einer gegen die Wirkung einer Rückstellfederanordnung auslenkbaren Schwingungsmasse umfasst.

Weiter kann das Schwingungsdämpfungsverhalten dadurch vorteilhaft beeinflusst werden, dass dem Schwingungssystem oder/und dem weiteren Schwingungssystem eine einer Relativdrehung zwischen Primärseite und Sekundärseite desselben entgegenwirkende Reibungsdämpfungsanodnung zugeordnet ist.

Die vorliegende Erfindung wird nachfolgend mit Bezug auf die beiliegenden Figuren detailliert beschrieben. Es zeigt:
- Fig.1: eine prinzipartige Teil-Längsschnittansicht einer hydrodynamischen Kopplungseinrichtung mit einer Drehschwingungsdämpfungsanordnung;
- Fig. 2: eine der Fig. 1 entsprechende Darstellung einer alternativen Ausgestaltungsart;
- Fig.3: eine weitere der Fig. 1 entsprechende Darstellung einer alternativen Ausgestaltungsart;
- Fig. 4: eine weitere der Fig. 1 entsprechende Darstellung einer alternativen Ausgestaltungsart;
- Fig. 5: eine Teil-Längsschnittdarstellung einer konstruktiven Ausführung des in Fig. 4 gezeigten Aufbaus;
- Fig. 6: eine weitere der Fig. 1 entsprechende Darstellung einer alternativen Ausgestaltungsart;
- Fig.7: eine weitere der Fig. 1 entsprechende Darstellung einer alternativen Ausgestaltungsart;
- Fig. 8: eine weitere der Fig. 1 entsprechende Darstellung einer alternativen Ausgestaltungsart;
- Fig. 9: eine weitere der Fig. 1 entsprechende Darstellung einer alternativen Ausgestaltungsart;
- Fig. 10: eine weitere der Fig. 1 entsprechende Darstellung einer alternativen Ausgestaltungsart;
- Fig. 11: eine Teil-Längsschnittdarstellung einer konstruktiven Ausführung des in Fig. 2 gezeigten Aufbaus.

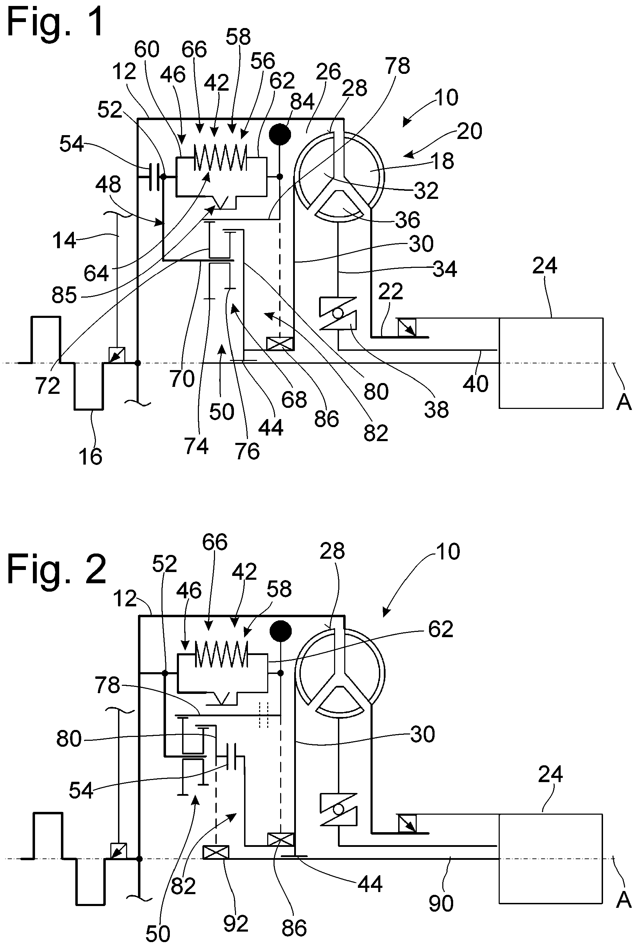

In Fig. 1 ist eine hydrodynamische Kopplungseinrichtung 10 in Form eines hydrodynamischen Drehmomentwandlers realisiert. Die Kopplungseinrichtung 10 umfasst ein Gehäuse 12, welches an ein Antriebsaggregat, beispielsweise eine nur symbolisch angedeutete Brennkraftmaschine 14 bzw. deren Kurbelwelle 16, angekoppelt und somit um eine Drehachse A drehbar ist. An einer Innenseite des Gehäuses 12 sind in Umfangsrichtung aufeinander folgend Pumpenradschaufeln 18 vorgesehen, so dass ein mit dem Gehäuse 12 um die Drehachse A drehbares Pumpenrad 20 bereitgestellt ist. Eine durch das Gehäuse 12 bereitgestellte Pumpennabe 22 ist in ein Getriebe 24 eingreifend positioniert und kann im Rotationsbetrieb des Gehäuses 12 eine im Getriebe 24 vorgesehene Fluid- bzw. Ölpumpe antreiben.

Im Innenraum 26 des Gehäuses 12 ist ein allgemein mit 28 bezeichnetes Turbinenrad angeordnet. Dieses umfasst eine Turbinenradschale 30 und eine Mehrzahl daran getragener und den Pumpenradschaufeln 18 axial gegenüberliegender Turbinenradschaufeln 32. Axial zwischen dem Pumpenrad 20 und dem Turbinenrad 28 ist ein Leitrad 34 mit seinen Leitradschaufeln 36 angeordnet. Das Leitrad 34 ist über eine Freilaufanordnung 38 auf einer Stützhohlwelle 40 in einer Richtung um die Drehachse A drehbar getragen.

Im Innenraum 26 ist eine allgemein mit 42 bezeichnete Drehschwingungsdämpfungsanordnung vorgesehen. Diese liegt im Drehmomentübertragungsweg zwischen dem Gehäuse 12 und einem Abtriebsorgan 44, beispielsweise einer Turbinenradnabe. Die Drehschwingungsdämpfungsanordnung dient dazu, durch Aufteilung des vom Gehäuse 12 aufgenommenen und an das Abtriebsorgan 44 weiter zu leitenden Drehmoments in zwei Drehmomentübertragungswege 46, 48 und durch Zusammenführung der über die beiden Drehmomentübertragungswege 46, 48 geleiteten Drehmomentenanteile an einer Kopplungsanordnung 50 Drehungleichförmigkeiten, also beispielsweise Drehmomentschwingungen oder Schwankungen, zu mindern bzw. im Idealfalle vollständig zu eliminieren.

Die Drehschwingungsdämpfungsanordnung 42 umfasst dabei einen Eingangsbereich 52, welcher das in das Gehäuse 12 eingeleitete Drehmoment über eine Überbrückungskupplung 54 aufnimmt. Diese Überbrückungskupplung 54 ist also dem Eingangsbereich 52 der Drehschwingungsdämpfungsanordnung 42 zugeordnet und wirkt zwischen diesem und der Gehäuseanordnung 12. Es sei darauf hingewiesen, dass die Überbrückungskupplung 54 in an sich bekannter Weise mit einem Kupplungskolben aufgebaut sein kann, der entweder direkt gegen das Gehäuse 12 gepresst werden kann oder gegen miteinander in Reibwechselwirkung bringbare ringscheibenartige Reibelemente.

Im Eingangsbereich 52 zweigen sich die beiden Drehmomentübertragungswege 46, 48 auf. Der erste Drehmomentübertragungsweg 46 davon umfasst eine Phasenschieberanordnung 56, welche bewirkt, dass das über diesen ersten Drehmomentübertagungsweg 46 geleitete Drehmoment eine Phasenverschiebung bezüglich des über den zweiten Drehmomentübertragungsweg 48 geleiteten Drehmoments erfährt.

Die Phasenschieberanordnung 56 umfasst einen Torsionsschwingungsdämpfer 58 mit einer Primärseite 60, einer Sekundärseite 62 und einer einer Relativdrehung zwischen der Primärseite 60 und der Sekundärseite 62 entgegenwirkenden Federeinheit 64. Es sei hier darauf hingewiesen, dass der Torsionsschwingungsdämpfer von herkömmlichem Aufbau sein kann und beispielsweise als Primärseite eine Nabenscheibe und als Sekundärseite zwei beidseits davon liegende und miteinander fest verbundene Deckscheibenelemente umfassen kann. Die Federeinheit 64 kann mehrere in Umfangsrichtung aufeinander folgende Federn, vorzugsweise Schraubendruckfedern, umfassen, die sich an der Primärseite 60 und der Sekundärseite 62 abstützend eine Rückstellkraft derselben bezüglich einander in Richtung zu einer Neutralrelativdrehlage bewirken. Der Torsionsschwingungsdämpfer 58 stellt also in dem in Fig. 1 dargestellten Ausgestaltungsbeispiel im Wesentlichen ein Schwingungssystem 66 bereit, welches im ersten Drehmomentübertragungsweg 46 zu einer Phasenverschiebung von darüber übertragenen Drehungleichförmigkeiten bzw. Drehmomentschwingungen führt. Dieses Schwingungssystem 66 weist bedingt durch die an der Primärseite und der Sekundärseite 62 vorhandenen Massen und die durch die Federeinheit 64 des Torsionsschwingungsdämpfers 58, welcher hier die Federanordnung des Schwingungssystems 66 bereitstellt, eine Eigenfrequenz bzw. Resonanzfrequenz auf. Bei Schwingungsanregungen unter dieser Eigenfrequenz werden zu übertragende Schwingungen im Wesentlichen ohne Phasenverschiebung übertragen. Wird die Resonanzfrequenz überschritten, tritt ein Phasensprung auf, der im Idealfalle und maximal 180° betragen kann, so dass anregende und weitergeleitete Schwingung zueinander gegenphasig verlaufen.

In der Kopplungsanordnung 50 werden die über die beiden Drehmomentübertragungswege 46, 48 geleiteten Drehmomente bzw. Drehmomentanteile wieder zusammengeführt. Hierzu ist die Kopplungsanordnung 50 als Planetengetriebeanordnung 68 ausgebildet und umfasst einen an den ersten Drehmomentübertragungsweg 48 angekoppelten Planetenradträger 70. Dieser trägt in Umfangsrichtung verteilt mehrere Planetenräder 72. Diese weisen zwei zueinander axial versetzt liegende Verzahnungen 74, 76 auf, die in dem in Fig. 1 dargestellten Ausgestaltungsbeispiel zueinander unterschiedliche Durchmesser bezogen auf die Rotationsachsen der Planetenräder 72 am Planetenradträger 70 aufweisen.

Ein erstes Hohlrad 78 ist mit der Sekundärseite 62 des Torsionsschwingungsdämpfers 58 bzw. des Schwingungssystems 66 verbunden und steht in Kämmeingriff mit den Verzahnungen 74 der Planetenräder 72. Ein zweites Hohlrad 80, welches im Wesentlichen auch einen Ausgangsbereich 82 der Drehschwingungsdämpfungsanordnung 46 bereitstellt, ist in Verzahnungseingriff mit den Verzahnungen 76 der Planetenräder 72.

Die Planetengetriebeanordnung 68 bewirkt durch Zusammenwirkung der auf dem Planetenradträger 70 grundsätzlich frei drehbar getragenen Planetenräder 72 mit den beiden Hohlrädern 78, 80 eine Zusammenführung der über die beiden Drehmomentübertragungswege 46, 48 geleiteten Drehmomente. Enthalten diese Drehmomente Schwingungsanteile und ist die Frequenz dieser Schwingungs- bzw. Schwankungsanteile unter der Resonanzfrequenz des Schwingungssystems 66, so werden die beiden Drehmomente bzw. Drehmomentanteile in der Kopplungsanordnung 50 phasengleich zusammengeführt bzw. überlagert. Das in den Ausgangsbereich 82 weitergeleitete Drehmoment entspricht somit auch hinsichtlich seines Schwankungsverlaufs näherungsweise dem im Eingangsbereich 52 von der Überbrückungskupplung 54 aufgenommenen Drehmoment.

Liegt die Frequenz der Schwingungsanteile jedoch über der Resonanzfrequenz des Schwingungssystems 66, hier also des Torsionsschwingungsdämpfers 58, so überlagern sich die beiden über die Drehmomentübertragungswege 46, 48 geleiteten Drehmomente mit ihren Schwingungsanteilen in der Kopplungsanordnung 50 destruktiv. Im Idealfalle, also bei einer Phasenverschiebung von 180°, kann hier eine vollständige Auslöschung der Schwingungsanteile erreicht werden, so dass das am Ausgangsbereich 82 aufgenommene Drehmoment einen im Wesentlichen geglätteten, zumindest aber deutlich schwingungsreduzierten Verlauf aufweist.

Um das Dämpfungsverhalten der Drehschwingungsdämfpungsanordnung 42 weiter beeinflussen zu können, kann beispielsweise der Sekundärseite 62 eine Zusatzmasse 84 zugeordnet sein, um somit die sekundärseitige Masse zu erhöhen und damit einen Einfluss auf die Resonanzfrequenz zu nehmen. Ferner kann dem Schwingungssystem 66 eine allgemein mit 85 bezeichnete Reibungsdämpfungsanordnung zugeordnet sein, die beispielsweise parallel zu der Federeinheit 64 zwischen der Primärseite 60 und der Sekundärseite 62 wirken kann und als Coulombsche Reibeinrichtung oder als Fluidreibeinrichtung ausgebildet sein kann. Das Bereitstellen einer derartigen parallel zur Federeinheit 64 wirksamen Reibungsdämpfungsanordnung 85 beeinflusst im Wesentlichen auch die Größe der durch Schwingungssystem 66 eingeführten Phasenverschiebung.

Man erkennt in Fig. 1 weiter, dass das Turbinenrad 28 an den Ausgangsbereich 82 der Drehschwingungsdämpfungsanordnung 42 angekoppelt ist, mithin die Masseverhältnisse im Schwingungssystem 66 selbst vor der Überlagerung der beiden über die Drehmomentübertragungswege 46, 48 geleiteten Drehmomente in der Kopplungsanordnung 50 im Wesentlichen nicht beeinflusst.

Die Sekundärseite 62 bzw. das damit gekoppelte Hohlrad 78 kann beispielsweise über eine Lagerung 86 am Ausgangsbereich 82 bzw. der Turbinenradschale 30 gelagert sein.

Durch die Ausgestaltung des Torsionsschwingungsdämpfers 58, also die Masse an der Primärseite 60, die Masse an der Sekundärseite 62, die Steifigkeit der Federeinheit 64 und die die sekundärseitige Masse unterstützende Zusatzmasse 84 wird im Allgemeinen einen möglichst niedrige Eigenfrequenz des Schwingungssystems 66 angestrebt, um somit bereits bei vergleichsweise niedrigen Schwingungsanregungen, also bereits bei vergleichsweise niedriger Drehzahl, den Übergang in den überkritischen, also mit Phasenverschiebung arbeitenden Betriebszustand zu erlangen.

Dadurch, dass die beiden Verzahnungen 74, 76 zueinander unterschiedliche Durchmesser aufweisen, mithin also auch die beiden Hohlräder 78, 80 zueinander unterschiedliche Hohlräder aufweisen, wird es möglich, einen Einfluss auf die Verteilung der Drehmomente auf die beiden Drehmomentübertragungswege 48, 48 zu nehmen. Je näher die Durchmesser der Hohlräder 78, 80, somit also auch die Durchmesser der Verzahnungen 74, 76 beieinander liegen, desto gleichmäßiger sind die Anteile der über die beiden Drehmomentübertragungswege 46, 48 geleiteten Drehmomente. Bei dem in der Fig. 1 dargestellten Ausgestaltungsbeispiel mit größerem Durchmesser der Verzahnung 74, welche mit dem Hohlrad 78 zusammenwirkt, wird ein Übersetzungsverhältnis erreicht, das unter 1 liegt, bei umgekehrtem Größenverhältnis wird ein Übersetzungsverhältnis erreicht, das über 1 liegt. In ersterem Falle wird das über den ersten Drehmomentübertragungsweg 46 geleitete Drehmoment unter Ausnutzung einer Drehmomentflussumkehr im zweiten Drehmomentübertragungsweg 48 erhöht, und zwar unter Abstützung an der Kopplungsanordnung 50. Auch hierbei wird im Sinne der Erfindung eine destruktive Überlagerung der beiden Drehmomentflüsse in den Drehmomentübertragungswegen genutzt, um am Ausgangsbereich 82 ein im Wesentlichen geglättetes Gesamtdrehmoment zu erhalten. Im zweiteren Falle, also bei größerer Verzahnung 76 und kleinerer Verzahnung 74, teilt sich entsprechend den Größenverhältnissen das am Eingangsbereich 52 eingeleitete Drehmoment so auf, dass in beiden Drehmomentübertragungswegen 46, 48 ein Drehmomentenfluss der gleichen Richtung erfolgt und die beiden in gleicher Richtung geleiteten Drehmomentanteile in der Kopplungsanordnung 50 einander überlagert werden.

Eine alternative Ausgestaltungsform der Kopplungseinrichtung 10 ist in Fig. 2 gezeigt. Es wird im Folgenden lediglich auf die zur vorangehend beschriebenen Ausgestaltungsform bestehenden Unterschiede eingegangen.

Bei der in Fig. 2 gezeigten Ausgestaltungsform ist die Überbrückungskupplung 54 dem Ausgangsbereich 82 der Drehschwingungsdämpfungsanordnung 42 zugeordnet, d. h. sie liegt im Drehmomentübertragungsweg zwischen dem Hohlrad 80 und dem Abtriebsorgan 44. Das Turbinenrad 28 ist mit seiner Turbinenradschale 30 direkt an das Abtriebsorgan 44 angebunden und damit an eine Eingangswelle 90 des Getriebes 24 zur gemeinsamen Drehung um die Drehachse A angekoppelt. Die Sekundärseite 62 des Schwingungssystems 66 bzw. des Torsionsschwingungsdämpfers 58 ist über das Lager 86 auf dem Ausgangsbereich 82 an einer Ausgangsseite der Überbrückungskupplung 54 gelagert. Das ebenfalls dem Ausgangsbereich 82 zuzurechnende Hohlrad 80 kann über ein weiteres Lager 92 zusammen mit der Eingangsseite der Überbrückungskupplung 54 beispielsweise bezüglich der Getriebeeingangswelle 90 gelagert sein.

Bei einer Variation dieser Ausgestaltungsform kann, wie durch punktierte Linien angedeutet, die Überbrückungskupplung 54 auch vor der Kopplungsanordnung 50, also im ersten Drehmomentübertragungsweg 46, angeordnet sein. Hierzu ist beispielsweise eine Aufteilung des dem ersten Drehmomentübertragungsweg 46 zuzurechnenden Hohlrads 78 möglich.

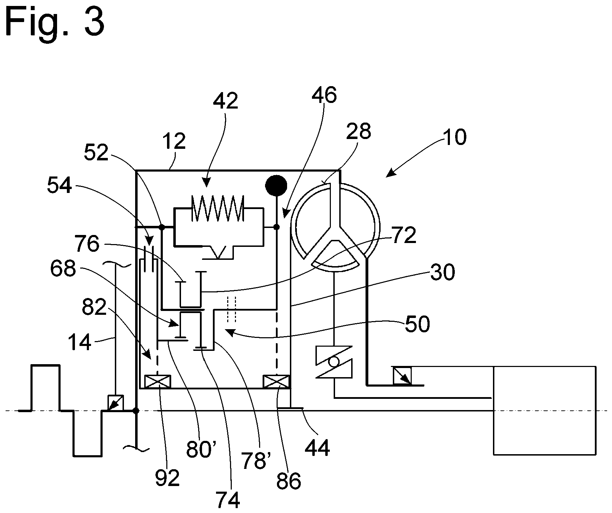

Eine weitere Variation ist in Fig. 3 dargestellt. Auch hier ist, ähnlich wie bei der Ausgestaltungsvariante der Fig. 2, der Eingangsbereich 52 der Drehschwingungsdämpfungsanordnung 42 im Wesentlichen starr an das Gehäuse 12 angebunden. Der erste Drehmomentübertragungsweg 46 ist an die nunmehr mit größerem Durchmesser ausgebildete Verzahnung 74 der Planetenräder 72 über ein Sonnenrad 78' angekoppelt. Der Ausgangsbereich 82 ist an die nunmehr mit dem kleineren Durchmesser ausgebildete Verzahnung 76 der Planetenräder 72 über ein Sonnenrad 80' angekoppelt. Zwischen diesem Sonnenrad 80' und dem Abtriebsorgan 44, also im Wesentlichen dem Ausgangsbereich 82 zugeordnet, wirkt wieder die Überbrückungskupplung 54. Diese kann axial zwischen der Kopplungsanordnung 50, also der Planetengetriebeanordnung 68, und der dem Antriebsaggregat 14 zugewandt zu positionierenden Seite des Gehäuses 12 angeordnet sein. Die beiden Sonnenräder 78', 80' können über die beiden Lager 86, 92 auf der Ausgangsseite 82 der Drehschwingungsdämpfungsanordnung 42 gelagert sein, welche Ausgangsseite 82 wiederum mit dem Turbinenrad 28 bzw. der Turbinenradschale 30 fest gekoppelt ist.

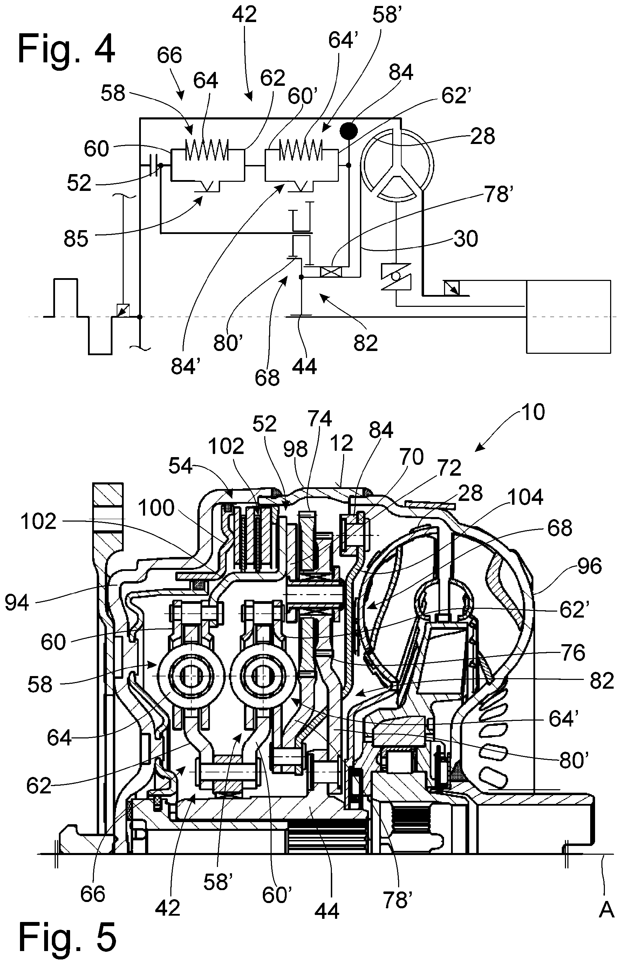

Eine weitere Variation ist in Fig. 4 dargestellt. Bei dieser Ausgestaltungsform umfasst das Schwingungssystem 66 zwei in Serie wirksame Torsionsschwingungsdämpfer 58, 58'. Die Primärseite 60 des Torsionsschwingungsdämpfers 58 ist an den Eingangsbereich 52 der Drehschwingungsdämpfungsanordnung 42 angebunden. Die Sekundärseite 62 des Torsionsschwingungsdämpfers 58 ist an eine Primärseite 60' des Torsionsschwingungsdämpfers 58' angebunden. Eine Sekundärseite 62' des Torsionsschwingungsdämpfers 58' ist an das Sonnenrad 78' der Planetengetriebeanordnung 68 angekoppelt. Die Turbinenradschale 30 des Turbinenrads 28 ist an das Sonnenrad 80', also den Ausgangsbereich 82 angekoppelt und damit mit dem Abtriebsorgan 44 zur Drehung fest verbunden. Die beiden Federeinheiten 64, 64' der beiden Torsionsschwingungsdämpfer 58, 58' bilden in ihrer Gesamtheit die Federanordnung des Schwingungssystems 66.

Es sei hier darauf hingewiesen, dass die beiden Torsionsschwingungsdämpfer 58, 58' in räumlicher Zuordnung sowohl axial aufeinander folgend, als auch radial gestaffelt zueinander liegen können. Auch ist es durchaus möglich, diese nicht seriell, sondern parallel wirken zu lassen, wobei dann die beiden Primärseiten 60, 60' einerseits und die beiden Sekundärseiten 62, 62' andererseits miteinander jeweils zu koppeln sind. Auch ist es selbstverständlich möglich, jedem der Torsionsschwingungsdämpfer 58, 58' eine Reibungsdämpfungsanordnung 85, 85' zuzuordnen.

Eine konstruktiv ausgeführte Kopplungseinrichtung 10 der in Fig. 4 gezeigten Ausgestaltungsform ist in Fig. 5 dargestellt. Man erkennt das Gehäuse 12 mit einer dem Antriebsaggregat zugewandt zu positionierenden Gehäuseschale 94 und einer dem Getriebe zugewandt zu positionierenden Gehäuseschale 96, die über einem Verbindungsgehäuseelement 98 miteinander verbunden sein können. Die Überbrückungskupplung 54 umfasst einen durch Fluiddruck axial bewegbaren Kolben 100 und eine Mehrzahl von antriebsseitigen und abtriebsseitigen scheibenartigen Reibelementen, die mit dem Gehäuse 12 einerseits bzw. einem Reibelemententräger 102 andererseits jeweils drehfest sind und gegeneinander pressbar sind, um den Überbrückungszustand herzustellen. Der Reibelemententräger 102 ist dem Eingangsbereich 52 der Drehschwingungsdämpfungsanordnung 42 zuzurechnen und ist an die durch zwei Deckscheibenelemente bereitgestellte Primärseite 60 des Torsionsschwingungsdämpfer 58 fest angebunden. Andererseits ist der Reibelemententräger 102 mit dem Planetenradträger 70 fest verbunden, so dass in diesem Bereich im Wesentlichen die Aufzweigung in die beiden Drehmomentübertragungswege erfolgt.

Die als Zentralscheibenelement bzw. Nabenscheibe ausgebildete Sekundärseite 62 des Torsionsschwingungsdämpfers 58 ist radial innerhalb der damit bzw. den Deckscheibenelementen zusammenwirkenden Federeinheit 64 mit der als Zentralscheibenelement bzw. Nabenscheibe ausgebildeten Primärseite 60' des Torsionsschwingungsdämpfers 58', z. B. durch Vernieten, verbunden. Beidseits davon liegen die beiden Deckscheibenelemente der Sekundärseite 62' des Torsionsschwingungsdämpfers 58'. Zwischen diesen und dem Zentralscheibenelement der Primärseite 60' wirken die Federn der Federeinheit 64'.

Mit dem in der Fig. 5 rechten der beiden Deckscheibenelemente der Sekundärseite 62' ist das Sonnenrad 78' beispielsweise durch Vernietung fest verbunden. Über diese Nietverbindung ist auch ein nach radial außen greifendes Trägerelement 104 an die Sekundärseite 62' angebunden, welches radial außen die Zusatzmasse 84 in Form eines oder mehrerer Massestücke trägt.

Das Sonnenrad 78' ist in Kämmeingriff mit der Verzahnung 74 der Planetenräder 72. Die Verzahnung 76 derselben ist in Kämmeingriff mit dem Sonnenrad 80'. Dieses wiederum ist an das Abtriebsorgan 44 angebunden und stellt im Wesentlichen auch den Ausgangsbereich 82 der Drehschwingungsdämpfungsanordnung 42 bereit.

Bei dieser Ausgestaltungsvariante sind die beiden Torsionsschwingungsdämpfer 58, 58' des Schwingungsdämpfungssystems 66 axial aufeinander folgend angeordnet, wobei die Federn der beiden Federeinheiten 64, 64' näherungsweise auf gleichem radialen Niveau liegen und beispielsweise jeweils mit ineinander geschachtelten Federn bzw. Federgruppen ausgebildet sein können. Die Überbrückungskupplung 54 liegt radial außerhalb der beiden Torsionsschwingungsdämpfer 58, 58'. Die im Wesentlichen die Planetengetriebeanordnung 68 umfassende Kopplungsanordnung liegt axial zwischen dem getriebeseitigen Torsionsschwingungsdämpfer 58' und dem Turbinenrad 28. Dieses ist beispielsweise mittels Verschweißung oder Vernietung mit dem Abtriebsorgan 44 fest verbunden, könnte aber auch an das Sonnenrad 80' angebunden sein. Das Sonnenrad 80', das mit dem Abtriebsorgan 44' durch Vernietung verbunden ist, könnte damit auch integral ausgebildet sein.

Ist die Überbrückungskupplung 54 geschlossen, so wirkt das nicht in die beiden Drehmomentübertragungswege der Drehschwingungsdämpfungsanordnung 42 integrierte Turbinenrad 28 lediglich zur Erhöhung des Massenträgheitsmoments des Ausgangsbereichs 82. Somit beeinflusst das Turbinenrad 28 das Schwingungsdämpfungsverhalten der Drehschwingungsdämpfungsanordnung 42 im Wesentlichen nicht. Hierfür sind insbesondere die zwischen dem Eingangsbereich 52 und dem Ausgangsbereich 82 vorhandenen Masseverhältnisse relevant, die maßgeblich auch beeinflusst werden durch die an das Sonnenrad 78' angekoppelte Zusatzmasse 84. Auch die Federsteifigkeiten der Federeinheiten 64, 64' beeinflussen selbstverständlich das Schwingungsdämpfungsverhalten bzw. die Resonanzfrequenz des Schwingungssystems 66.

Bei dieser Ausgestaltungsform sind die Torsionsschwingungsdämpfer 58, 58' aufgrund ihrer radialen Positionierung und ihrer konstruktiven Ausgestaltung besonders reibungsarm und ermöglichen somit einen reproduzierbaren Phasenübergang zwischen dem unterkritischen und dem überkritischen Zustand. Gleichzeitig können die verschiedenen Verbindungsstellen, beispielsweise zum Verbinden der Primärseite 62 mit der Sekundärseite 60' bzw. zum Anbinden der Sekundärseite 62' an das Sonnenrad 78' bzw. das Trägerelement 104 oder die Nietverbindungen der Deckscheibenelemente als Drehwinkelbegrenzungen für die beiden Torsionsschwingungsdämpfer 58, 58' genutzt werden. Man erkennt weiter, dass im Bereich der Verbindung der Sekundärseite 62 mit der Primärseite 60' die beiden Torsionsschwingungsdämpfer 58, 58' radial bezüglich der Abtriebsnabe 44 gelagert sein können. Hier kann gleichzeitig auch die Funktion der axialen Lagerung implementiert sein. Alternativ wäre hier auch eine Lagerung unmittelbar auf der nicht dargestellten Getriebeeingangswelle denkbar. Weiter erkennt man in Fig. 5, dass die Drehachsen der Planetenräder 72 am Planetenradträger 70 radial außerhalb der Federeinheiten 64, 64' angeordnet sind, also einen größeren Radialabstand zur Drehachse als diese aufweisen. Dies ermöglicht beispielsweise eine Ausgestaltung, bei welcher das mit dem Sonnenrad 78' verbundene Deckscheibenelement der Sekundärseite 62' mit diesem Sonnenrad 78' integral ausgebildet sein könnte, dieses also selbst bereitstellen könnte. Selbstverständlich wäre es auch denkbar, das andere der beiden Deckscheibenelemente des Torsionsschwingungsdämpfer 58' als Sonnenrad 78' auszugestalten bzw. damit zu verbinden und damit die Planetenräder 72 axial zwischen den beiden Torsionsschwingungsdämpfern 58, 58' zu positionieren.

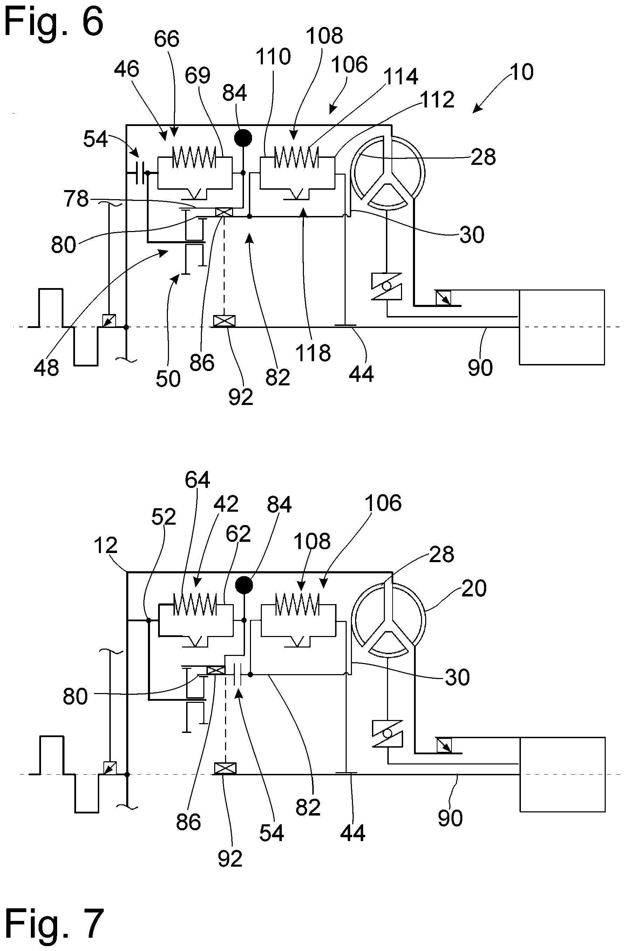

Die Fig. 6 zeigt eine weitere Ausgestaltungsvariante der Kopplungseinrichtung 10 in prinzipartiger Darstellung. Das Schwingungssystem 66 entspricht dabei im Wesentlichen dem in Fig. 1 dargestellten Aufbau. Auch die Ausgestaltung der Kopplungsanordnung 50 bzw. deren Wechselwirkung mit den Hohlrädern 78, 80 entspricht dem Aufbau der Fig. 1. Man erkennt, dass die Turbinenradschale 30 an das abtriebsseitige Hohlrad 80 angebunden ist bzw. dieses integral bereitstellen kann. Damit ist auch ein wesentlicher Bereich des Ausgangsbereichs 82 realisiert, welcher bei diesem Ausgestaltungsbeispiel jedoch ein weiteres Schwingungssystem 106 umfasst. Das weitere Schwingungssystem 106 ist hier mit einem Torsionsschwingungsdämpfer 108 mit einem Eingangsbereich 110 und einem Ausgangsbereich 112 und einer dazwischen wirkenden Federeinheit 114 ausgebildet. Der Eingangsbereich 110 ist an das Hohlrad 80 bzw. die Turbinenradschale 30 und mithin das Turbinenrad 28 angekoppelt. Der Ausgangsbereich 112 ist an das Abtriebsorgan 44 angekoppelt. Somit wird das am Hohlrad aufgenommene, zuvor über die beiden Drehmomentübertragungswege 46, 48 geleitete Drehmoment über das weitere Schwingungssystem 106 bzw. den Torsionsschwingungsdämpfer 108 desselben zum Abtriebsorgan 44 geleitet.

Die Sekundärseite 62 des Schwingungssystems 66 bzw. das damit gekoppelte Hohlrad 78 kann hier über das Lager 86 auf dem Ausgangsbereich bzw. dem Hohlrad 80 gelagert sein, welches wiederum über das Lager 92 beispielsweise auf der Getriebeeingangswelle 90 gelagert sein kann.

Grundsätzlich ist hier also ein Aufbau gezeigt, bei welchem das Turbinenrad 28 als Zwischenmasse zwischen die beiden Schwingungssysteme 66, 106 eingegliedert ist. Der im Drehmomentenfluss folgende Torsionsschwingungsdämpfer 108 des weiteren Schwingungssystems 106 wirkt auch bei ausgerückter Überbrückungskupplung 54, also im Drehmomentwandlungsbetrieb, als sogenannter Turbinentorsionsdämpfer, was abtriebsseitig, also im Bereich des Abtriebsorgans 44, zu einer vergleichsweise niedrigen Massenträgheit beiträgt. Dabei ist zu berücksichtigen, dass die Federsteifigkeit bzw. Kennlinie der Federeinheit 114 mindestens auf das Nennmoment des Antriebsaggregats einschließlich einer beispielsweise durch Drehmomentschwankungen eingeführten Streuung auszulegen ist.

Zur Beeinflussung der sekundärseitigen Masse des Schwingungssystems 66 kann dort wieder die Zusatzmasse 84 vorgesehen sein.

Eine Abwandlung des vorangehend beschriebenen Aufbaus mit dem weiteren Schwingungssystem 106 ist in Fig. 7 gezeigt. Bei dieser Variante ist der Eingangsbereich 52 der Drehschwingungsdämpfungsanordnung 42 im Wesentlichen starr an das Gehäuse 12 angebunden. Die Überbrückungskupplung 54 ist dem Ausgang 82 zugeordnet, ist beispielsweise zwischen dem Hohlrad 80 und der Turbinenradschale 30 des Turbinenrads 28 wirksam.

Bei ausgerückter Überbrückungskupplung 54 ist der Drehmomentenfluss vom Eingangsbereich 52 zum Antriebsorgan 44 unterbrochen. Das Drehmoment wird über das Pumpenrad 20, das Turbinenrad 28 und das weitere Schwingungssystem 106 zum Abtriebsorgan 44 und von diesem auf die Getriebeeingangswelle 90 geleitet. Das Turbinenrad 28 ist bei dieser Ausgestaltungsvariante über den als Turbinentorsionsdämpfer wirksamen Torsionsschwingungsdämpfer 108 des weiteren Schwingungssystems 106 bezüglich der Getriebeeingangswelle 90 gelagert bzw. radial zentriert.

Bei ausgerückter Überbrückungskupplung 54 wirkt die Drehschwingungsdämpfungsanordnung 42 insbesondere auch durch das Bereitstellen der Zusatzmasse 84 auf der Sekundärseite 62 als sogenannter Festfrequenztilger, da in das Gehäuse 12 eingeleitete Drehschwingungen auch über den Eingangsbereich 52 auf die Federeinheit 64 geleitet werden und mithin die Zusatzmasse 84 und alle damit verbundenen Bauteile eine freie Schwingung durchführen können.

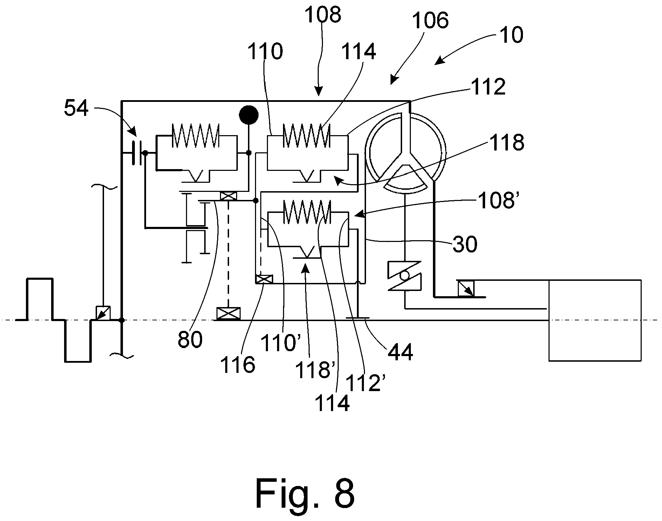

In Fig. 8 ist eine Ausgestaltungsvariante gezeigt, bei welcher das weitere Schwingungssystem 106 zwei seriell wirksame Torsionsschwingungsdämpfer 108, 108' umfasst. Die Sekundärseite 112 des mit seiner Primärseite 110 an das Hohlrad 80 angebundenen Torsionsschwingungsdämpfers 108 ist mit der Primärseite 110' des Torsionsschwingungsdämpfers 108' verbunden. Eine Sekundärseite 112' dieses Torsionsschwingungsdämpfers 108' ist an das Abtriebsorgan 44 angebunden. Ein die Sekundärseite 112 und die Primärseite 110 umfassender Zwischenbereich der beiden Torsionsschwingungsdämpfer 108, 108' kann über ein Lager 116 auf der Turbinenradschale 30 bzw. dem Hohlrad 80 bzw. einem diese beiden Baugruppen verbindenden Abschnitt gelagert sein.

Selbstverständlich kann jedem der Torsionsschwingungsdämpfer des weiteren Schwingungssystems 106 eine Reibungsdämpfungsanordnung 118 bzw. 118' zugeordnet sein. Weiter ist es möglich, dass die beiden Torsionsschwingungsdämpfer 108, 108' zueinander parallel wirksam sind. Hierzu sind die beiden Primärseiten 110, 110' und die beiden Sekundärseiten 112, 112' jeweils miteinander festzukoppeln.

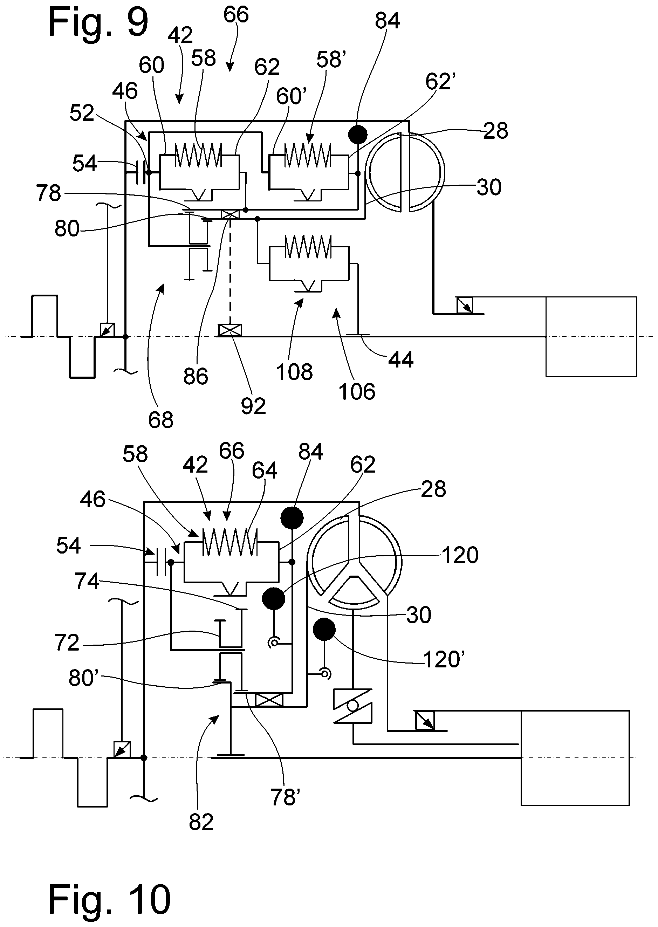

Bei der in Fig. 9 gezeigten Ausgestaltungsvariante ist das Schwingungssystem 66 der Drehschwingungsdämpfungsanordnung 42, also das im ersten Drehmomentübertragungsweg 46 wirksame Schwingungssystem, mit zwei parallel wirksamen Torsionsschwingungsdämpfern 58, 58' ausgebildet. Deren Primärseiten 60, 60' sind jeweils an den Eingangsbereich 52 angebunden bzw. stellen diesen im Wesentlichen auch bereit. Ihre Sekundärseiten 62, 62' sind einerseits mit der Zusatzmasse 84 fest gekoppelt und andererseits mit dem Hohlrad 78. Das Hohlrad 80 der Planetengetriebeanordnung 68 ist mit dem Turbinenrad 28 einerseits und über den Torsionsschwingungsdämpfer 108 des weiteren Schwingungssystems 106 mit dem Abtriebsorgan 44 andererseits gekoppelt.

Die Fig. 10 zeigt eine Ausgestaltungsvariante, bei welcher die Sekundärseite 62 des Torsionsschwingungsdämpfers 58 des Schwingungssystems 60 über ein Sonnenrad 78' mit der Verzahnung 74 der Planetenräder 72 gekoppelt ist. Das Turbinenrad 28 ist vermittels seiner Turbinenradschale 30 an den Ausgangsbereich 82 und damit das Sonnenrad 80' angebunden. In Zuordnung zur Sekundärseite 62 des Torsionsschwingungsdämpfers 58, also auch in Zuordnung zum ersten Drehmomentübertragungsweg 46, ist eine nicht im Drehmomentenfluss vom Gehäuse 12 zum Abtriebsorgan liegende Schwingungsdämpfungsanordnung 120 vorgesehen. Diese kann beispielsweise eine gegen die Rückstellwirkung einer Federanordnung auslenkbare, im Wesentlichen frei schwingende Massenanordnung umfassen, also als Festfrequenztilger wirksam sein. Auch kann die Schwingungsdämpfungsanordnung 120 drehzahladaptiv wirkend ausgebildet sein mit einer oder mehreren entlang von Auslenkungsbahnen geführten Massen ausgebildet sein. Die Auslenkungsbahnen sind nach radial innen gekrümmt, weisen also einen Scheitelbereich auf. Fliehkraftbedingt werden die auszulenkenden Massen sich in diesem Scheitelbereich positionieren. Bei Auftreten von Drehungleichförmigkeiten erfolgt die Auslenkung aus dem Scheitelbereich, wobei aufgrund der gekrümmten Ausgestaltung der Führungsbahnen die Auslenkungsmassen dabei nach radial innen bewegt werden und potentielle Energie aufnehmen.

Eine derartige als Festfrequenztilger wirksame oder drehzahladaptive Schwingungsdämpfungsanordnung 120' kann alternativ oder zusätzlich auch in Zuordnung zum Ausgangsbereich 82 vorgesehen sein.

Es ist darauf hinzuweisen, dass bei ausgerückter Überbrückungskupplung 54, also im Drehmomentwandlungsbetrieb, dann, wenn Drehschwingungen auf das Turbinenrad 28 übertragen werden, auch die über die Federeinheit 64 des Torsionsschwingungsdämpfers 58 abgestützte Zusatzmasse 84 frei schwingen kann und somit ebenfalls im Sinne einer Festfrequenz-Schwingungsdämpfungsanordnung wirksam sein kann.

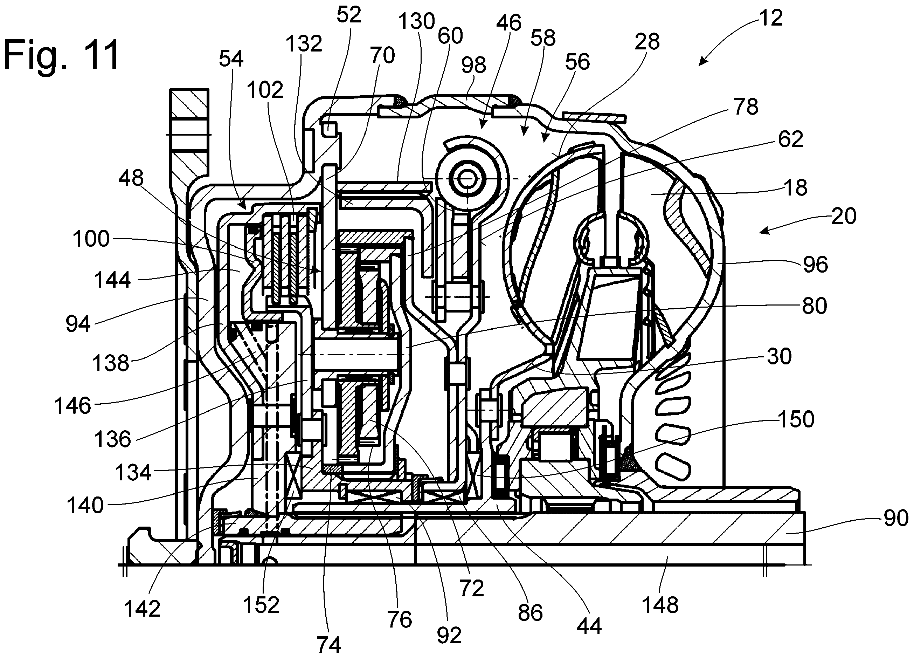

In Fig. 11 ist eine konstruktive Ausgestaltung einer Kopplungseinrichtung 10 dargestellt, wie sie in Fig. 2 in prinzipartiger Weise gezeigt ist. Bei der in Fig. 11 dargestellten Kopplungseinrichtung ist an der motorseitigen Gehäuseschale 94 beispielsweise durch Vernietung in deren radial äußeren Bereich der Planetenradträger 70 festgelegt, welcher in diesem Bereich auch den Eingangsbereich 52 bereitstellt. Am Planetenradträger 70 sind in dessen radial inneren Bereich die wieder gestuft ausgebildeten Planetenräder 72 drehbar getragen. Im radial äußeren Bereich ist mit dem Planetenradträger 70 beispielsweise durch Verschweißung ein ringartiges Verzahnungselement 130 fest verbunden. Dieses ist in Drehkopplungseingriff mit einem Gegenverzahnungselement 132, welches wiederum mit der beispielsweise in Form eines Zentralscheibenelements bzw. einer Nabenscheibe ausgebildeten Primärseite 60 des Torsionsschwingungsdämpfers 58 durch Vernietung oder dergleichen fest verbunden. Das Verzahnungselement 130 könnte auch direkt mit dem Gehäuse verbunden oder durch dieses bereitgestellt sein. Die Sekundärseite 62 des Torsionsschwingungsdämpfers 58 umfasst zwei Deckscheibenelemente. Diese sind durch Vernietung fest miteinander verbunden. Mit einem dieser Deckscheibenelemente ist durch Vernietung oder dergleichen das hier mehrteilig ausgebildete Hohlrad 78 fest verbunden, welches mit den Verzahnungen 74 der Planetenräder 72 in Kämmeingriff steht. Das ebenfalls hier mehrteilig ausgebildete Hohlrad 80, das mit den Verzahnungen 76 der Planetenräder 72 in Kämmeingriff steht, ist in seinem radial inneren Bereich durch Steckverzahnung oder dergleichen mit einem Übertragungselement 134 drehfest gekoppelt. Dieses Übertragungselement 134 wiederum ist durch Vernietung mit einem eingangsseitigen Reibelemententräger 136 der Überbrückungskupplung 54 drehfest verbunden. Ein ausgangsseitiger Reibelemententräger 138, welcher hier gleichzeitig auch als Außenlamellenträger ausgebildet ist, ist mit einem weiteren Übertragungselement 140 durch Vernietung fest verbunden. In seinem radial inneren Bereich ist das Übertragungselement 140 beispielsweise durch Verschweißen an ein weiteres mit Außenverzahnung versehenes Übertragungselement 142 mit im Allgemeinen zylindrischer Struktur fest angebunden. Dieses Übertragungselement 142 steht mit seiner Außenverzahnung in Drehkopplungseingriff mit einer Innenverzahnung des Abtriebsorgans 44, welche Innenverzahnung axial angrenzend an das Übertragungselement 142 mit einer Außenverzahnung der Getriebeeingangswelle 90 in Kämmeingriff steht. An das Abtriebsorgan 44 bzw. einen radial nach außen greifenden, flanschartigen Bereich desselben, ist die Turbinenradschale 30 des Turbinenrads 28 durch Vernietung fest angebunden.

Bei ausgerückter Überbrückungskupplung 54 wird durch hydrodynamische Wechselwirkung zwischen dem Pumpenrad 20 und dem Turbinenrad 28 ein Drehmoment auf das Turbinenrad 28 und über dessen im Wesentlichen starre Ankopplung an die Getriebeeingangswelle 90 auf diese übertragen. Im eingerückten Zustand der Überbrückungskupplung, also einem Zustand, in welchem die mit dem antriebsseitigen Reibelemententräger 136 drehfesten Reibelemente bzw. Lamellen 102 und die mit dem abtriebsseitigen Reibelemententräger 138 drehfesten Reibelemente bzw. Lamellen 102 durch den Kupplungskolben 100 gegeneinander gepresst sind, erhöht das Turbinenrad 28 das Massenträgheitsmoment der Getriebeeingangswelle 90, ist hinsichtlich der Schwingungsdämpfungsfunktionalität jedoch von untergeordneter Bedeutung. Hier ist die Auslegung der Massenverhältnisse in den beiden Drehmomentübertragungswegen 46 bzw. 48 von größerer Bedeutung. Das am Planetenradträger 70 aufgezweigte Drehmoment wird einerseits über den Torsionsschwingungsdämpfer 58 der Phasenschieberanordnung 56 geleitet, wird andererseits über den Planetenradträger 70 und die Planetenräder 72 geleitet und durch deren Wechselwirkung mit den beiden Hohlrädern 78, 80 wieder zusammengeführt auf das Übertragungselement 134, den Reibelemententräger 138, die Übertragungselemente 140, 142 und das Abtriebsorgan 44 in die Getriebeeingangswelle 90 eingeleitet.

Zur Erlangung dieses Einrückzustands der Überbrückungskupplung 54 ist durch den Reibelemententräger 138 und das Übertragungselement 140 in Zusammenwirkung mit dem radial außen und radial innen fluiddicht daran axial beweglich geführten Kupplungskolben 100 ein mit Druckfluid zu füllender Volumenbereich 144 gebildet, welcher von radial innen her über Kanäle 146 im Übertragungselement 140 gespeist werden kann. Das Übertragungselement 140 ist unter Vermittlungswirkung des Abtriebsorgans 44 an die Getriebeeingangswelle 90 drehfest angekoppelt, so dass es im axialen Endbereich durch eine statische Dichtungsanordnung, beispielsweise zwei Dichtungsringe, bezüglich des Außenumfangs der Getriebeeingangswelle 90 fluiddicht angeschlossen sein kann. Es kann somit in baulich einfacher Weise eine Fluidleitungsverbindung zwischen dem Raumbereich 144 und einer zentralen Öffnung 148 in der Getriebeeingangswelle 90 hergestellt werden. Sofern bei baulich anderer Ausführung eine Relativdrehung zwischen dem Übertragungselement 142 und der Getriebeeingangswelle 90 auftritt, wäre die fluiddichte Ankopplung durch dynamische Dichtungselemente zu realisieren.

Die radiale Zentrierung der Primärseite 60 des Torsionsschwingungsdämpfers 90 erfolgt über das an das Verzahnungselement 130 angekoppelte und durch dieses radial zentrierte Gegenverzahnungselement 132. Die Radialzentrierung der Sekundärseite 62 des Torsionsschwingungsdämpfers 58 erfolgt über eine Radiallagerung 86 auf dem Außenumfang des Abtriebsorgans 44. Die Axiallage des Torsionsschwingungsdämpfers ist durch ein axial bezüglich des Abtriebsorgans bzw. des Turbinenrads 28 sich abstützendes Axiallager 150 vorgegeben. In der anderen axialen Richtung ist die Sekundärseite 62 vermittels einer Anlaufscheibe oder einer sonstigen Lagerung bezüglich des Übertragungselements 134 abgestützt. Dieses wiederum ist durch eine Lagerung 152 axial bezüglich des Übertragungselements 140 abgestützt. Dieses ist, wie bereits ausgeführt, fest an das Übertragungselement 142 angebunden, das axial durch eine Anlaufscheibe oder sonstige Lagerung bezüglich der Gehäuseschale 94 abgestützt ist. Weiter ist das Übertragungselement 134 und mit diesem auch das Hohlrad 80 durch eine Lagerung 92 radial bezüglich des Abtriebsorgans 44 und somit auch bezüglich der Getriebeeingagswelle 90 gelagert.

Es sei darauf hingewiesen, dass die Sekundärseite 62 des Torsionsschwingungsdämpfers 58 selbstverständlich auf direkt bezüglich des abtriebsseitigen Hohlrads 80 axial abgestützt sein könnte. Auch wäre es möglich, die Sekundärseite 62 auf dem Hohlrad 78 zu lagern.

Das Übertragungselement 142 könnte mit einer Innenverzahnung ausgebildet sein und dann an eine entsprechend komplementär gestaltete Außenverzahnung an dem Abtriebsorgan 44 angekoppelt sein. In diesem Falle könnte das zum Reibelemententräger 136 führende Übertragungselement 134 über die Lagerung 92 auf dem Übertragungselement 142 drehbar radial gelagert sein. Weiterhin könnte das Übertragungselement 142 auch unmittelbar die Funktionalität des Abtriebsorgans 44 bereitstellen, also an die Getriebeeingangswelle 90 durch entsprechende Verzahnung drehfest angebunden sein. In diesem Falle wäre das Turbinenrad 28 bzw. dessen Turbinenradschale 30 drehfest beispielsweise über einen entsprechenden Flansch an dieses Übertragungselement 142 anzubinden.

Es sei zu dieser Ausgestaltungsform ausgeführt, dass durch die verschiedenen Lagerstellen, insbesondere die axialen Lagerungen bzw. verschiedene Axialstützringe bzw. Sicherungsringe auch die beiden Hohlräder, die selbstverständlich auch einteilig ausgebildet sein könnten, in ihrer axialen Positionierung definiert gehalten sind.

Es ist abschließend darauf hinzuweisen, dass selbstverständlich bei den verschiedenen vorangehend beschriebenen Ausgestaltungsformen die dort gezeigten Variationsaspekte beliebig miteinander kombiniert werden können. So können beispielsweise bei der Drehschwingungsdämpfungsanordnung 42 bzw. dem Schwingungssystem 66 derselben mehrere Torsionsschwingungsdämpfer seriell und dazu einer oder mehrere Torsionsschwingungsdämpfer parallel wirksam sein. Dies trifft ebenso für das weitere Schwingungssystem 106 zu. Auch ist es selbstverständlich möglich, dass bei den verschiedenen Ausgestaltungsvarianten sowohl jeweils Hohlräder, als alternativ dazu auch Sonnenräder als Kopplungsräder zur Anbindung an die Planetenräder 72 der Planetengetriebeanordnung 68 vorgesehen sein können. Die Verzahnungen 74, 76 der Planetenräder 72 können entsprechend dem jeweils gewünschten Schwingungsdämpfungsverhalten mit zueinander gleichen oder sich unterscheidenden Durchmessern und somit Übersetzungsverhältnissen bereitgestellt sein. Auch ist darauf hinzuweisen, dass sowohl die Planetenräder 72 als auch die damit in Eingriff stehenden Kopplungsräder, also Sonnenräder oder Hohlräder, jeweils mehrteilig oder/und segmentartig ausgebildet sein können, da aufgrund der nur begrenzten Relativbewegbarkeit der Primärseite bezüglich der Sekundärseite im Schwingungssystem 66 auch im Bereich der Planetenräder 72 bzw. der damit zusammenwirkenden Kopplungsräder nur entsprechend begrenzte Relativbewegungen auftreten.

Mit der Integration einer erfindungsgemäß wirksamen bzw. aufgebauten Drehschwingungsdämpfungsanordnung in den Drehmomentübertragungsweg zwischen einem Gehäuse und einem Abtriebsorgan in einer hydrodynamischen Kopplungseinrichtung werden in einen Antriebsstrang bei grundsätzlich einfachem Aufbau sehr stark schwingungsberuhigend wirksame Maßnahmen integriert, welche zu einem deutlich erhöhten Fahrkomfort beitragen. Die durch die phasenverschobene Überlagrung zweier Drehmomentenanteile des gesamt zu übertragenden Drehmoments erreichte destruktive Überlagerung von Schwingungsanteilen erreicht bei sehr kompakter Ausgestaltung ein Schwingungsdämpfungsniveau, welches ansonsten nur bei wesentlich größer dimensionierten Federdämpfern erreichbar wäre. Mit diesem deutlich verbesserten Schwingungsdämpfungsverhalten wird auch die Entstehung von Geräuschen im Antriebsstrang wesentlich reduziert. Aufgrund des deutlich geminderten Schwingungsanteils in dem in den Antriebsstrang eingeleiteten Drehmoment wird es weiterhin möglich, dass die Überbrückungskupplung bereits bei geringerer Drehzahl geschlossen werden kann, was einen energieeffizienteren Betrieb eines Fahrzeugs gestattet.

Es sei weiter darauf hingewiesen, dass die Erfindungsprinzipien selbstverständlich auch Anwendung finden können, wenn die Kopplungseinrichtung ohne Leitrad ausgebildet ist. In diesem Falle kann sie nicht die Funktionalität der Drehmomentwandlung im Sinne einer Drehmomentenerhöhung erfüllen, sondern ist als Fluidkupplung bzw. Strömungskupplung wirksam.

## Patentansprüche

1. Hydrodynamische Kopplungseinrichtung, insbesondere Drehmomentwandler, umfassend eine mit Fluid gefüllte oder füllbare Gehäuseanordnung (12), ein mit der Gehäuseanordnung (12) um eine Drehachse (A) drehbares Pumpenrad (20), ein in der Gehäuseanordnung (12) angeordnetes und mit einem Abtriebsorgan (44) um die Drehachse (A) drehbares Turbinenrad (28), eine Überbrückungskupplung (54) zur Herstellung einer Drehmomentübertragungsverbindung zwischen der Gehäuseanordnung (12) und dem Abtriebsorgan (44), eine Drehschwingungsdämpfungsanordnung (42) mit einem Eingangsbereich (52) und einem Ausgangsbereich (82), wobei zwischen dem Eingangsbereich (52) und dem Ausgangsbereich (82) ein erster Drehmomentübertragungsweg (46) und parallel dazu ein zweiter Drehmomentübertragungsweg (48) sowie eine Kopplungsanordnung (50) zur Überlagerung der über die Drehmomentübertragungswege (46, 48) geleiteten Drehmomente vorgesehen sind, wobei die Drehschwingungsdämpfungsanordnung (42) ferner wenigstens im ersten Drehmomentübertragungsweg (46) eine Phasenschieberanordnung (56) umfasst zur Erzeugung einer Phasenverschiebung von über den ersten Drehmomentübertragungsweg (46) geleiteten Drehungleichförmigkeiten bezüglich über den zweiten Drehmomentübertragungsweg geleiteten Drehungleichförmigkeiten; **dadurch gekennzeichnet, dass** die Drehschwingungsdämpfungsanordnung (42) so angeordnet ist, dass durch ein Unterbrechen von einem der Drehmomentübertragungswege (46, 48) der gesamte Drehmomentfluss über die Drehschwingungsdämpfungsanordnung (42) unterbrochen wird.

2. Hydrodynamische Kopplungseinrichtung nach Anspruch 1,
**dadurch gekennzeichnet, dass** die Phasenschieberanordnung (56) ein Schwingungssystem (66) mit einer Primärseite (60, 60') und einer gegen die Wirkung einer Federanordnung (64; 64, 64') bezüglich der Primärseite (60, 60') um die Drehachse (A) drehbaren Sekundärseite (62; 62') umfasst.

3. Hydrodynamische Kopplungseinrichtung nach Anspruch 1 oder 2,
**dadurch gekennzeichnet, dass** der Ausgangsbereich (82) ein weiteres Schwingungssystem (106) mit einer Primärseite (110, 110') und einer gegen die Wirkung einer Federanordnung (114; 114, 114') bezüglich der Primärseite (110) drehbaren Sekundärseite (112; 112') umfasst.

4. Hydrodynamische Kopplungseinrichtung nach einem der Ansprüche 1 bis 3, **dadurch gekennzeichnet, dass** das Turbinenrad (28) an den Ausgangsbereich (82) angekoppelt ist.

5. Hydrodynamische Kopplungseinrichtung nach Anspruch 3 und Anspruch 4, **dadurch gekennzeichnet, dass** das Turbinenrad (28) mit der Primärseite (110) des weiteren Schwingungssystems (106) gekoppelt ist.

6. Hydrodynamische Kopplungseinrichtung nach Anspruch 3 und Anspruch 4, **dadurch gekennzeichnet, dass** das Turbinenrad (28) mit der Sekundärseite (112; 112') des weiteren Schwingungssystems (106) gekoppelt ist.

7. Hydrodynamische Kopplungseinrichtung nach einem der Ansprüche 1 bis 6, **dadurch gekennzeichnet, dass** die Überbrückungskupplung (54) wirkungsmäßig in einem der Drehmomentübertragungswege (46, 48), vorzugsweise dem ersten Drehmomentübertragungsweg (46), angeordnet ist.

8. Hydrodynamische Kopplungseinrichtung nach einem der Ansprüche 1 bis 6, **dadurch gekennzeichnet, dass** die Überbrückungskupplung (54) wirkungsmäßig im Ausgangsbereich (82) angeordnet ist.

9. Hydrodynamische Kopplungseinrichtung nach einem der Ansprüche 1 bis 6, **dadurch gekennzeichnet, dass** die Überbrückungskupplung (54) wirkungsmäßig im Eingangsbereich (52) angeordnet ist.

10. Hydrodynamische Kopplungseinrichtung nach einem der Ansprüche 1 bis 9, **dadurch gekennzeichnet, dass** die Kopplungsanordnung (50) eine Planetengetriebeanordnung (68) umfasst.

11. Hydrodynamische Kopplungseinrichtung nach Anspruch 10,
**dadurch gekennzeichnet, dass** die Planetengetriebeanordnung (68) einen an den zweiten Drehmomentübertragungsweg (48) angebundenen Planetenradträger (70) mit einer Mehrzahl von daran drehbar getragenen Planetenrädern (72) umfasst.

12. Hydrodynamische Kopplungseinrichtung nach Anspruch 11,
**dadurch gekennzeichnet, dass** die Planetengetriebeanordnung (68) eine an den ersten Drehmomentübertragungsweg (46) angebundene erste Koppelradanordnung (78; 78') in Kämmeingriff mit den Planetenrädern (72) und eine an den Ausgangsbereich (82) angebundene zweite Koppelradanordnung (80; 80') in Kämmeingriff mit den Planetenrädern (72) umfasst.

13. Hydrodynamische Kopplungseinrichtung nach Anspruch 12,
**dadurch gekennzeichnet, dass** die erste Koppelradanordnung (78; 78') in Verbindung mit den Planetenrädern (72) und die zweite Koppelradanordnung (80; 80') in Verbindung mit den Planetenrädern (72) zueinander gleiche Übersetzungsverhältnisse bereitstellen.

14. Hydrodynamische Kopplungseinrichtung nach Anspruch 12,
**dadurch gekennzeichnet, dass** die erste Koppelradanordnung (78; 78') in Verbindung mit den Planetenrädern (72) und die zweite Koppelradanordnung (80; 80') in Verbindung mit den Planetenrädern (72) zueinander unterschiedliche Übersetzungsverhältnisse bereitstellen.

15. Hydrodynamische Kopplungseinrichtung nach einem der Ansprüche 12 bis 14, **dadurch gekennzeichnet, dass** die erste Koppelradanordnung (78) und die zweite Koppelradanordnung (80) jeweils eine Hohlradanordnung (78, 80) umfassen.

16. Hydrodynamische Kopplungseinrichtung nach einem der Ansprüche 12 bis 14, **dadurch gekennzeichnet, dass** die erste Koppelradanordnung (78') und die zweite Koppelradanordnung (80') jeweils eine Sonnenradanordnung (78', 80') umfasst.

17. Hydrodynamische Kopplungseinrichtung nach einem der Ansprüche 1 bis 16, **dadurch gekennzeichnet, dass** das Schwingungssystem (66) oder/und das weitere Schwingungssystem (106) wenigstens zwei zueinander seriell angeordnete Schwingungsdämpfer (58, 58', 108, 108') jeweils mit einer Primärseite (60, 60', 110, 110') und einer bezüglich dieser drehbaren Sekundärseite (62, 62', 112, 112') umfasst.

18. Hydrodynamische Kopplungseinrichtung nach einem der Ansprüche 1 bis 17, **dadurch gekennzeichnet, dass** das Schwingungssystem (66) oder/und das weitere Schwingungssystem (106) wenigstens zwei zueinander parallel wirksame Schwingungsdämpfer (58, 58', 108, 108') jeweils mit einer Primärseite (60, 60', 110, 110') und einer bezüglich dieser drehbaren Sekundärseite (62, 62', 112, 112') umfasst.

19. Hydrodynamische Kopplungseinrichtung nach einem der Ansprüche 1 bis 18, **dadurch gekennzeichnet, dass** das Schwingungssystem (66) oder/und das weitere Schwingungssystem (106) eine drehzahladaptive Schwingungsdämpfungsanordnung (120, 120') mit wenigstens einer in Umfangsrichtung aus einer Grundlage auslenkbaren und dabei ihren Abstand zur Drehachse (A) verändernde Auslenkungsmasse umfasst.

20. Hydrodynamische Kopplungseinrichtung nach einem der Ansprüche 1 bis 19, **dadurch gekennzeichnet, dass** das Schwingungssystem (66) oder/und das weitere Schwingungssystem (106) eine Festfrequenz-Schwingungsdämpfungsanordnung (120, 120') wenigstens einer gegen die Wirkung einer Rückstellfederanordnung auslenkbaren Schwingungsmasse umfasst.

21. Hydrodynamische Kopplungseinrichtung nach einem der Ansprüche 1 bis 20, **dadurch gekennzeichnet, dass** dem Schwingungssystem (66) oder/und das weiteren Schwingungssystem (106) eine einer Relativdrehung zwischen Primärseite (60, 110) und Sekundärseite (62, 112; 62', 112') desselben entgegenwirkende Reibungsdämpfungsanordnung (85, 85, 118, 118') zugeordnet ist.

## Claims

1. Hydrodynamic coupling device, in particular torque converter, comprising a housing arrangement (12) which is filled or can be filled with fluid, an impeller (20) which can be rotated with the housing arrangement (12) about a rotational axis (A), a turbine wheel (28) which is arranged in the housing arrangement (12) and can be rotated with an output member (44) about the rotational axis (A), a lock-up clutch (54) for producing a torque transmission connection between the housing arrangement (12) and the output member (44), a torsional vibration damping arrangement (42) with an input region (52) and an output region (82), a first torque transmission path (46) being provided between the input region (52) and the output region (82) and, parallel thereto, a second torque transmission path (48) and a coupling arrangement (50) for superimposing the torques which are conducted via the torque transmission paths (46, 48) being provided, the torsional vibration damping arrangement (42) comprising, furthermore, a phase shifter arrangement (56) at least in the first torque transmission path (46) in order to produce a phase shift of rotational non-uniformities which are conducted via the first torque transmission path (46) with regard to rotational non-uniformities which are conducted via the second torque transmission path, **characterized in that** the torsional vibration damping arrangement (42) is arranged in such a way that the entire torque flow via the torsional vibration damping arrangement (42) is interrupted by way of an interruption of one of the torque transmission paths (46, 48).

2. Hydrodynamic coupling device according to Claim 1, **characterized in that** the phase shifter arrangement (56) comprises a vibration system (66) with a primary side (60, 60') and a secondary side (62; 62') which can be rotated about the rotational axis (A) with regard to the primary side (60, 60') counter to the action of a spring arrangement (64; 64, 64').

3. Hydrodynamic coupling device according to Claim 1 or 2, **characterized in that** the output region (82) comprises a further vibration system (106) with a primary side (110, 110') and a secondary side (112; 112') which can be rotated with regard to the primary side (110) counter to the action of a spring arrangement (114; 114, 114').

4. Hydrodynamic coupling device according to one of Claims 1 to 3, **characterized in that** the turbine wheel (28) is coupled to the output region (82).

5. Hydrodynamic coupling device according to Claim 3 and Claim 4, **characterized in that** the turbine wheel (28) is coupled to the primary side (110) of the further vibration system (106).

6. Hydrodynamic coupling device according to Claim 3 and Claim 4, **characterized in that** the turbine wheel (28) is coupled to the secondary side (112; 112') of the further vibration system (106).

7. Hydrodynamic coupling device according to one of Claims 1 to 6, **characterized in that** the lock-up clutch (54) is arranged in terms of action in one of the torque transmission paths (46, 48), preferably the first torque transmission path (46).

8. Hydrodynamic coupling device according to one of Claims 1 to 6, **characterized in that** the lock-up clutch (54) is arranged in terms of action in the output region (82).

9. Hydrodynamic coupling device according to one of Claims 1 to 6, **characterized in that** the lock-up clutch (54) is arranged in terms of action in the input region (52).

10. Hydrodynamic coupling device according to one of Claims 1 to 9, **characterized in that** the coupling arrangement (50) comprises a planetary gear mechanism arrangement (68).

11. Hydrodynamic coupling device according to Claim 10, **characterized in that** the planetary gear mechanism arrangement (68) comprises a planetary gear carrier (70) which is attached to the second torque transmission path (48) and has a plurality of planetary gears (72) which are supported rotatably thereon.

12. Hydrodynamic coupling device according to Claim 11, **characterized in that** the planetary gear mechanism arrangement (68) comprises a first coupling gear arrangement (78; 78') which is attached to the first torque transmission path (46) in a manner which is in meshing engagement with the planetary gears (72), and a second coupling gear arrangement (80; 80') which is attached to the output region (82) in a manner which is in meshing engagement with the planetary gears (72).

13. Hydrodynamic coupling device according to Claim 12, **characterized in that** the first coupling gear arrangement (78; 78'), in conjunction with the planetary gears (72), and the second coupling gear arrangement (80; 80'), in conjunction with the planetary gears (72), provide transmission ratios which are identical to one another.

14. Hydrodynamic coupling device according to Claim 12, **characterized in that** the first coupling gear arrangement (78; 78'), in conjunction with the planetary gears (72), and the second coupling gear arrangement (80; 80'), in conjunction with the planetary gears (72), provide transmission ratios which are different from one another.

15. Hydrodynamic coupling device according to one of Claims 12 to 14, **characterized in that** the first coupling gear arrangement (78) and the second coupling gear arrangement (80) comprise in each case one internal gear arrangement (78, 80).

16. Hydrodynamic coupling device according to one of Claims 12 to 14, **characterized in that** the first coupling gear arrangement (78') and the second coupling gear arrangement (80') comprise in each case one sun gear arrangement (78', 80').

17. Hydrodynamic coupling device according to one of Claims 1 to 16, **characterized in that** the vibration system (66) and/or the further vibration system (106) comprise/comprises at least two vibration dampers (58, 58', 108, 108') which are arranged in series with respect to one another and in each case have a primary side (60, 60', 110, 110') and a secondary side (62, 62', 112, 112') which can be rotated with regard to the former.

18. Hydrodynamic coupling device according to one of Claims 1 to 17, **characterized in that** the vibration system (66) and/or the further vibration system (106) comprise/comprises at least two vibration dampers (58, 58', 108, 108') which are active in parallel to one another and in each case have a primary side (60, 60', 110, 110') and a secondary side (62, 62', 112, 112') which can be rotated with regard to the former.

19. Hydrodynamic coupling device according to one of Claims 1 to 18, **characterized in that** the vibration system (66) and/or the further vibration system (106) comprise/comprises a vibration damping arrangement (120, 120') with an adaptive rotational speed and with at least one deflection mass which can be deflected in the circumferential direction out of a basic position and in the process changes its spacing from the rotational axis (A).

20. Hydrodynamic coupling device according to one of Claims 1 to 19, **characterized in that** the vibration system (66) and/or the further vibration system (106) comprise/comprises a fixed-frequency vibration damping arrangement (120, 120') of at least one vibration mass which can be deflected counter to the action of a restoring spring arrangement.

21. Hydrodynamic coupling device according to one of Claims 1 to 20, **characterized in that** the vibration system (66) and/or the further vibration system (106) are/is assigned a friction damping arrangement (85, 85', 118, 118') which counteracts a relative rotation between the primary side (60, 110) and the secondary side (62, 112; 62', 112') of the said vibration system.

## Revendications

1. Dispositif de couplage hydrodynamique, en particulier convertisseur de couple, comprenant un agencement de boîtier (12) rempli ou pouvant être rempli de fluide, une roue de pompe (20) pouvant tourner autour d'un axe de rotation (A) avec l'agencement de boîtier (12), une roue de turbine (28) disposée dans l'agencement de boîtier (12) et pouvant tourner autour de l'axe de rotation (A) avec un organe de prise de force (44), un embrayage de pontage (54) pour établir une liaison de transfert de couple entre l'agencement de boîtier (12) et l'organe de prise de force (44), un agencement d'amortissement des oscillations de torsion (42) avec une région d'entrée (52) et une région de sortie (82), dans lequel une première voie de transfert de couple (46), et parallèlement à celle-ci, une deuxième voie de transfert de couple (48), ainsi qu'un agencement d'accouplement (50) pour la superposition des couples dérivés par le biais des voies de transfert de couple (46, 48) sont prévus entre la région d'entrée (52) et la région de sortie (82), l'agencement d'amortissement des oscillations de torsion (42) comprenant en outre au moins dans la première voie de transfert de couple (46) un agencement de déphaseur (56) pour générer un déphasage des irrégularités de rotation dérivées par le biais de la première voie de transfert de couple (46) par rapport aux irrégularités de rotation dérivées par le biais de la deuxième voie de transfert de couple ; **caractérisé en ce que** l'agencement d'amortissement des oscillations de torsion (42) est disposé de telle sorte que par une interruption de l'une des voie de transfert de couple (46, 48), l'ensemble du flux de couple via l'agencement d'amortissement des oscillations de torsion (42) soit interrompu.

2. Dispositif de couplage hydrodynamique selon la revendication 1,
**caractérisé en ce que** l'agencement de déphaseur (56) comprend un système d'oscillation (66) avec un côté primaire (60, 60') et un côté secondaire (62 ; 62') pouvant tourner à l'encontre de l'action d'un agencement de ressort (64 ; 64, 64') autour de l'axe de rotation (A) par rapport au côté primaire (60, 60').

3. Dispositif de couplage hydrodynamique selon la revendication 1 ou 2,
**caractérisé en ce que** la région de sortie (82) comprend un système d'oscillation supplémentaire (106) avec un côté primaire (110, 110') et un côté secondaire (112 ; 112') pouvant tourner par rapport au côté primaire (110) à l'encontre de l'action d'un agencement de ressort (114 ; 114, 114').

4. Dispositif de couplage hydrodynamique selon l'une quelconque des revendications 1 à 3,
**caractérisé en ce que** la roue de turbine (28) est accouplée à la région de sortie (82).

5. Dispositif de couplage hydrodynamique selon la revendication 3 et la revendication 4,
**caractérisé en ce que** la roue de turbine (28) est accouplée au côté primaire (110) du système d'oscillation supplémentaire (106).

6. Dispositif de couplage hydrodynamique selon la revendication 3 et la revendication 4,
**caractérisé en ce que** la roue de turbine (28) est accouplée au côté secondaire (112 ; 112') du système d'oscillation supplémentaire (106).

7. Dispositif de couplage hydrodynamique selon l'une quelconque des revendications 1 à 6,
**caractérisé en ce que** l'embrayage de pontage (54) est disposé fonctionnellement dans l'une des voies de transfert de couple (46, 48), de préférence dans la première voie de transfert de couple (46).

8. Dispositif de couplage hydrodynamique selon l'une quelconque des revendications 1 à 6,
**caractérisé en ce que** l'embrayage de pontage (54) est disposé fonctionnellement dans la région de sortie (82).

9. Dispositif de couplage hydrodynamique selon l'une quelconque des revendications 1 à 6,
**caractérisé en ce que** l'embrayage de pontage (54) est disposé fonctionnellement dans la région d'entrée (52).

10. Dispositif de couplage hydrodynamique selon l'une quelconque des revendications 1 à 9,
**caractérisé en ce que** l'agencement de couplage (50) comprend un agencement d'engrenage planétaire (68).

11. Dispositif de couplage hydrodynamique selon la revendication 10,
**caractérisé en ce que** l'agencement d'engrenage planétaire (68) comprend un porte-satellites (70) raccordé à la deuxième voie de transfert de couple (48) avec une pluralité de satellites (72) supportés à rotation sur celui-ci.

12. Dispositif de couplage hydrodynamique selon la revendication 11,
**caractérisé en ce que** l'agencement d'engrenage planétaire (68) comprend un premier agencement de roue de couplage (78 ; 78') raccordé à la première voie de transfert de couple (46) en engagement d'engrènement avec les satellites (72) et un deuxième agencement de roue de couplage (80 ; 80') raccordé à la région de sortie (82) en engagement d'engrènement avec les satellites (72).

13. Dispositif de couplage hydrodynamique selon la revendication 12,
**caractérisé en ce que** le premier agencement de roue de couplage (78 ; 78') en liaison avec les satellites (72) et le deuxième agencement de roue de couplage (80 ; 80') en liaison avec les satellites (72) fournissent des rapports de démultiplication identiques l'un à l'autre.

14. Dispositif de couplage hydrodynamique selon la revendication 12,
**caractérisé en ce que** le premier agencement de roue de couplage (78 ; 78') en liaison avec les satellites (72) et le deuxième agencement de roue de couplage (80 ; 80') en liaison avec les satellites (72) fournissent des rapports de démultiplication différents l'un de l'autre.

15. Dispositif de couplage hydrodynamique selon l'une quelconque des revendications 12 à 14,
**caractérisé en ce que** le premier agencement de roue de couplage (78) et le deuxième agencement de roue de couplage (80) comprennent chacun un agencement de couronne dentée (78, 80).

16. Dispositif de couplage hydrodynamique selon l'une quelconque des revendications 12 à 14,
**caractérisé en ce que** le premier agencement de roue de couplage (78') et le deuxième agencement de roue de couplage (80') comprennent chacun un agencement de roue solaire (78', 80').

17. Dispositif de couplage hydrodynamique selon l'une quelconque des revendications 1 à 16,
**caractérisé en ce que**
le système d'oscillation (66) et/ou le système d'oscillation supplémentaire (106) comprennent au moins deux amortisseurs d'oscillations (58, 58', 108, 108') disposés en série l'un par rapport à l'autre avec à chaque fois un côté primaire (60 60', 110, 110') et un côté secondaire (62, 62' 112, 112') pouvant tourner par rapport à celui-ci.

18. Dispositif de couplage hydrodynamique selon l'une quelconque des revendications 1 à 17,
**caractérisé en ce que** le système d'oscillation (66) et/ou le système d'oscillation supplémentaire (106) comprennent au moins deux amortisseurs d'oscillations agissant parallèlement l'un à l'autre (58, 58', 108, 108'), à chaque fois avec un côté primaire (60, 60', 110, 110') et un côté secondaire (62, 62', 112, 112') pouvant tourner par rapport à celui-ci.

19. Dispositif de couplage hydrodynamique selon l'une quelconque des revendications 1 à 18,
**caractérisé en ce que** le système d'oscillation (66) et/ou le système d'oscillation supplémentaire (106) comprennent un agencement d'amortissement d'oscillation à vitesse de rotation adaptative (120, 120') avec au moins une masse de déviation pouvant être déviée d'une position de base dans la direction périphérique et modifiant ainsi sa distance à l'axe de rotation (A).

20. Dispositif d'accouplement hydrodynamique selon l'une quelconque des revendications 1 à 19, **caractérisé en ce que** le système d'oscillation (66) et/ou le système d'oscillation supplémentaire (106) comprennent un agencement d'amortissement des oscillations à fréquence fixe (120, 120') d'au moins une masse oscillante pouvant être déviée de à l'encontre de l'action d'un agencement de ressort de rappel.

21. Dispositif de couplage hydrodynamique selon l'une quelconque des revendications 1 à 20,
**caractérisé en ce qu'**au système d'oscillation (66) et/ou au système d'oscillation supplémentaire (106) est associé un agencement d'amortissement de friction (85, 85', 118, 118') agissant à l'encontre d'une rotation relative entre le côté primaire (60, 110) et le côté secondaire (62, 112 ; 62', 112') de celui-ci.
